Europäisches Patentamt

European Patent Office

Office européen des brevets

(11) Veröffentlichungsnummer: **0 058 733**
A1

(12) **EUROPÄISCHE PATENTANMELDUNG**

(21) Anmeldenummer: **81101271.5**

(22) Anmeldetag: **21.02.81**

(51) Int. Cl.³: **B 29 C 1/00,** A 63 H 33/14

(43) Veröffentlichungstag der Anmeldung: **01.09.82**
**Patentblatt 82/35**

(84) Benannte Vertragsstaaten: **AT BE CH DE FR GB IT LI LU NL SE**

(71) Anmelder: **DiDi Spielwaren GmbH, Karl Spitta Strasse 2, D-8430 Neumarkt Opf. (DE)**

(72) Erfinder: **Rosbach, Hannelore, geb. Herbig, Karl Spitta Strasse 2, D-8430 Neumarkt (DE)**

(74) Vertreter: **Göbel, Matthias, Dipl.-Ing., Pruppacher Hauptstrasse 5-7, D-8501 Pyrbaum-Pruppach (DE)**

(54) **Vorrichtung zum Ausformen von Spielbausteinen und Spielbauplatten.**

(57) Die Vorrichtung zum Ausformen von Spielbausteinen und Spielbauplatten aus einem erhärt- oder polymerisierbaren Werkstoff weist eine Grundplatte (1) mit einer ebenen Ober- (1') und Unterseite (1'') und zwei auf der Oberseite (1') im Abstand planparallel nebeneinander ausgebildete Stützwände (2) auf. Zwischen den Stützwänden (2) ist zur Bildung von Formkammern (7) ein sich bis zu den Stützwänden (2) erstreckender rastenförmiger Formeinsatz (4) mit stützwandseitigen Offenseiten auf der Grundplatte (1) frei auflegbar.

EP 0 058 733 A1

# M. GÖBEL
## PATENTANWALT

8501 PYRBAUM-PRUPPACH
PRUPPACHER HAUPTSTRASSE 5-7
TELEFON 09180 / 675

BANKKONTEN
VOLKSBANK NÜRNBERG 45 2 33 BLZ 760 900 00
COMMERZBANK NÜRNBERG 8 300 907 BLZ 760 400 61

- 1 -

10. FEB. 1981

Didi Spielwaren GmbH, D 8430 Neumarkt Opf.

Vorrichtung zum Ausformen von Spielbausteinen und Spielbauplatten

Die Erfindung betrifft eine Vorrichtung zum Ausformen von Spielbausteinen und Spielbauplatten aus erhärt- oder polymerisierbaren Werkstoffen.

Bei einer bekannten Vorrichtung zum Ausformen von Spielbausteinen finden auf einer Grundplatte aufgebrachte Schieber mit nebeneinander aufrecht angeordnete Formwände Anwendung, die mittels der Schieber zur Bildung von Formkammern mit den Offenseiten an eine grundplattenfeste Querwand anlegbar sind. Bei diesen Vorrichtungen führt der Schieberantrieb zu einer ungünstigen Vergrösserung des baulichen Aufwands. Außerdem bereitet die Entnahme der Spielbausteine aus den schieberfesten Formkammern Schwierigkeiten.

Die Erfindung hat zur Aufgabe die Herstellung von Spielbausteinen und Spielbauplatten einfacher und die Entnahme der Spielbausteine und Spielbauplatten aus den Formkammern sicherer zu machen.

Der Erfindung gemäß ist dies erreicht durch die Anordnung einer Grundplatte mit einer ebenen Ober- und Unterseite und zwei auf der Oberseite im Abstand planparallel nebeneinander fest angeordneten Stützwänden sowie mindestens einem zwischen den Stützwänden auf der Oberseite der Grundplatte frei auflegbaren, sich bis zu den Stützwänden erstreckenden Formansatz mit Formkammern.

Nach bevorzugter Ausgestaltung der Vorrichtung findet ein rastenförmiger Formeinsatz Anwendung, dessen Breite im wesentlichen mit der Länge der Stützwände ausgeführt ist und zweireihig eine Anzahl nebeneinander ausgebildete Formkammern mit den Stützwänden zugewandten Offenseiten aufweist. Die Grundplatte und der Formeinsatz ergeben gemeinsam mit den Stützwänden eine Anzahl oben offene Formkammern in die das vorbereitete Steinrohmaterial eingießbar ist, während nach dem Erhärten oder der Polymerisierung des Steinrohmaterials durch seitliches Abschieben des Formeinsatzes von der Grundplatte ein Entnehmen der Spielbausteine nach oben oder unten bzw. über den Offenseiten sicher erfolgen kann. Ein erleichtertes Ausschieben kann nach zuvorigem geringen Verwinden der Grundplatte erfolgen,

- 3 -

wodurch eine beschädigungsfreie Entnahme der Spielbausteine von der Vorrichtung gewährleistet ist.

Es entspricht dem Erfindungsgedanken, die Formkammern durch entsprechende Ausbildung des Formeinsatzes beliebig zu gestalten. Außerdem ist vorgesehen zur Vermeidung von unbeabsichtigten Abbiegungen der Stützwände, diese mittels auf den einander abgewandten Seiten ausgebildeten Streben auf der Grundplatte kipp- und verbiegungsfrei abzustützen. Die Stützwände selbst können ebenso wie die Streben fest, z.B. durch Klemmittel mit der Grundplatte verbunden sein. Vorteilhaft ist jedoch, die Grundplatte, die Stützwände und die Streben einstückig auszuführen und ebenso wie der Formeinsatz, insbesondere aus einem plastisch verformbaren Werkstoff, z.B. einem Styrol-Polymerisat, auszubilden. Der vorgeschlagene Werkstoff gibt durch seine Eigenflexiblität die Voraussetzung zu einer Verwindung der Grundplatte bzw. zu Abbiegungen von Teilen des Formeinsatzes zum Zwecke einer leichten Entformung.

Der Gebrauchszweck der Vorrichtung läßt sich fernerhin noch dadurch vergrößern, daß der Formeinsatz mit mindestens einer Formkammer mit den zu übrigen Formkammern aufweisender Teillänge versehen ist. Die kürzer gestaltete Formkammer erlaubt Halbsteine und gegebenenfalls Steine beliebiger Länge herzustellen.

Schließlich sieht die Erfindung noch vor, die Grundplatte auf den Stützwänden aufzustellen und auf die nunmehr oben sich erstreckende Unterseite zum Ausformen von Spielbauplatten einen umlaufend geschlossenen Plattenformrahmen frei aufzulegen. Der Plattenformrahmen kann dabei mit beliebigen Formen und Größen sowie Höhen ausgebildet sein und ist gemeinsam mit der ausgeformten Spielbauplatte durch leichtes Verwinden der Grundplatte von dieser sicher ablösbar. Der Plattenformrahmen kann ferner einen zusätzlich auf der Unterseite frei aufgelegten rasterförmigen Formeinsatz umfassen und gemeinsam mit dem Formeinsatz weiter Formkammern, insbesondere mit geringer Größe und Dicke bilden.

Es entspricht der Erfindung daß gegebenenfalls auch Kernkörper auf der Grundplatte zum Ausformen von Ausnehmungen oder Durchbrüchen in den Spielbausteinen oder Spielbauplatten auflegbar sind. Auch ist denkbar durch Auflegen entsprechender Kernkörper, Spielbausteine mit

- 5 -

Hohlräumen in der Art von Hohlblocksteinen der Großtechnik herzustellen.

Es versteht sich, daß die Vorrichtung in den Korngrößen
beliebige Rohmaterialien umgefärbt oder eingefärbt zum
Ausformen von Spielbausteinen bzw. - platten in Anwendung bringen läßt.

Die Erfindung ist in der Zeichnung an einem Ausführungsbeispiel verdeutlicht. Es bedeuten:

Fig. 1        eine Vorrichtung perspektivisch,

Fig. 2        eine Vorrichtung in Seitenansicht,

Fig. 3        eine Grundplatte in Seitenansicht,

Fig. 4        ein Formeinsatz in Draufsicht,

Fig. 5        eine Vorrichtung in Seitenansicht mit
              abgebogener Grundplatte,

Fig. 6        eine Vorrichtung in Draufsicht mit teilweise abgeschobenem Formeinsatz,

Fig. 7        eine Grundplatte mit einem Plattenformrahmen in Seitenansicht,

Fig. 8        ein Teilstück einer Grundplatte mit einem
              Plattenformrahmen in Draufsicht,

- 6 -

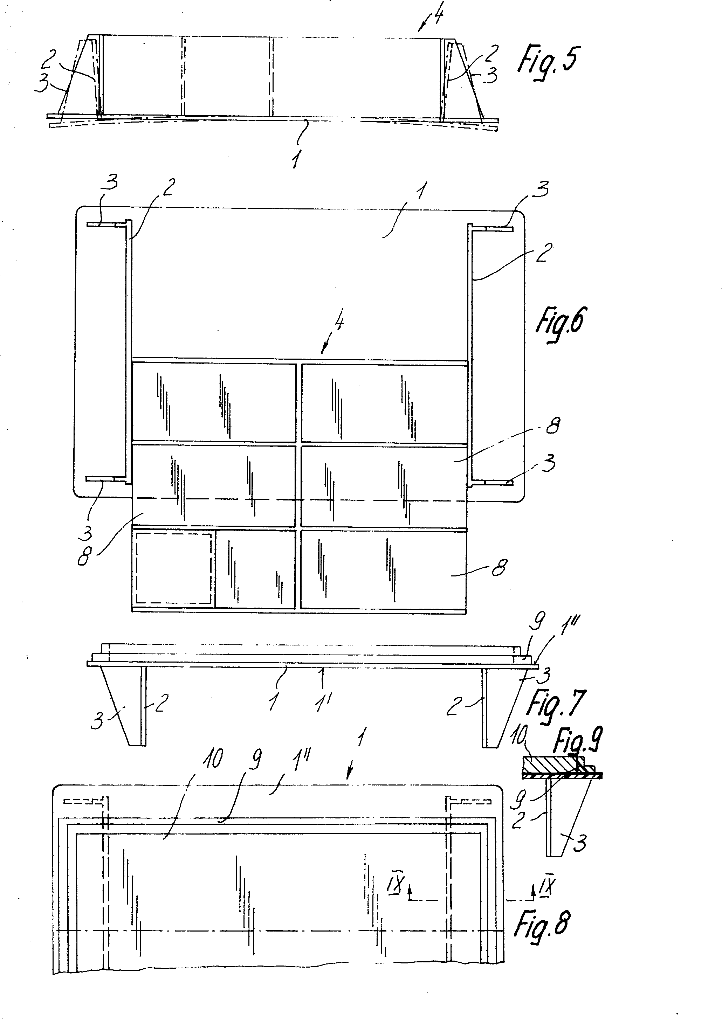

Fig. 9  einen Teilschnitt einer Grundplatte mit
Plattenformrahmen nach der Linie IX-IX
der Fig. 8 und

Fig. 10  ein Teilstück einer Vorrichtung in Draufsicht.

In den Figuren ist mit 1 eine an der Oberseite 1' und der Unterseite 1'' ebene Grundplatte bezeichnet. Auf der Oberseite 1 ' sind im Abstand planparallel zwei streifenförmige, insbesondere einstückig mit der Grundplatte 1 ausgebildete Stützwände 2 fest angeordnet, die durch auf den einander abgewandten Seiten vorgesehene Streben 3 kippfrei auf der Grundplatte 1 abgestützt sind. Zwischen den Stützwänden 2 ist auf der Grundplatte 1 ein Formeinsatz 4 frei aufgelegt, der zur Bildung von Formkammern 7 eine Anzahl parallele Wandstreifen 5 und einen mittigen Verbindungssteg 6 für diese aufweist. Die Formkammern 7 sind an den den Stützwänden 2 zugewandten Enden offen. Die Grundplatte 1, die Stützwände 2, die Streben 3 und die Formeinsätze 4 sind beim Ausführungsbeispiel aus einem plastisch verformbaren Werkstoff, z.B. Styrol-Polymerisat gebildet, der sich durch eine leichte Eigenflexiblität auszeichnet. Eine Formkammer 7' ist zur Herstellung von Spielbausteinen mit halber Länge mit entsprechend verkürzter Länge ausgeführt.

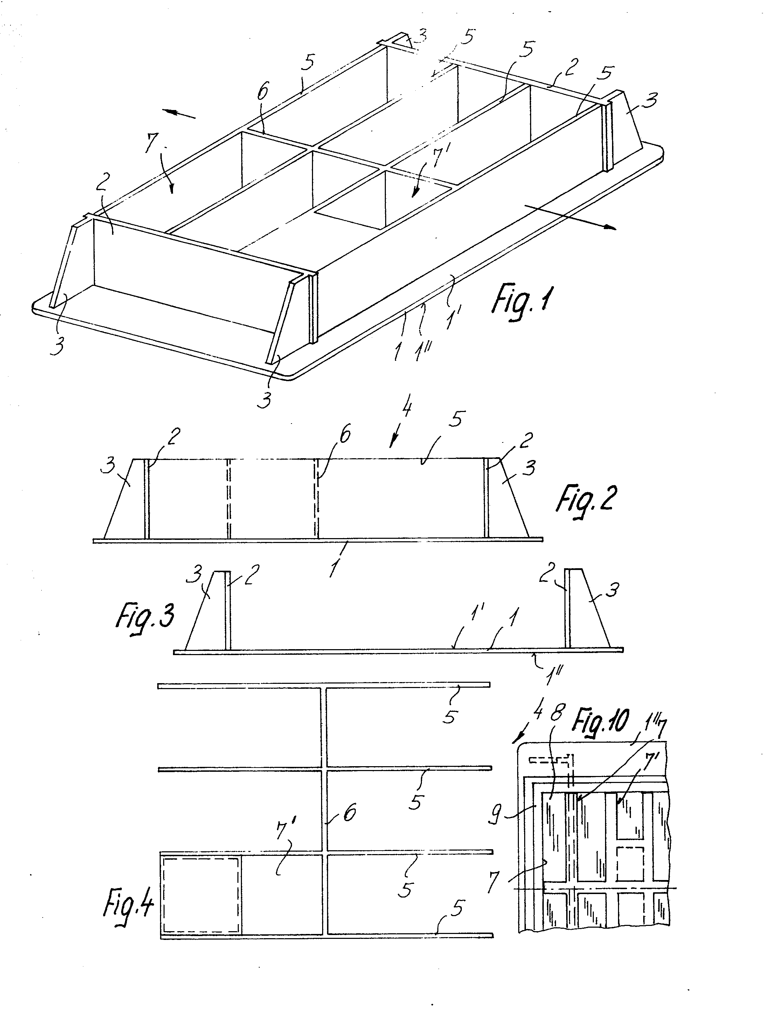

In Fig. 1 ist auf der Oberseite 1' des Unterteils 1 zwischen den Stützwänden 2 ein rasterförmiger Formeinsatz 4 gemäß Fig. 4 aufgelegt. Die Wandstreifen 5 des Formeinsatzes 4 erstrecken sich bis zu den Stützwänden 2 und bilden mit diesen eine Anzahl umlaufend geschlossene Formkammern 7 für das Steinrohmaterial. In die Formkammern 7 ist das, z.B. durch Wasser verflüssigte Steinrohmaterial von oben her eingießbar. Nach dem Erhärten des Steinrohmaterials ist der Formeinsatz 4 gemeinsam mit den Spielbausteinen 8 durch leichtes Verwinden der Grundplatte 1 von der Grundplatte (Fig. 5) zu lösen und mit den Spielbausteinen, wie in Fig. 6 gezeigt, seitlich von der Grundplatte abzuschieben. Die Spielbausteine 8 sind anschließend aus den Formkammern 7 nach oben oder unten bzw. über die offenen Stirnseiten dem Formeinsatz 4, diesem zu entnehmen.

In den Fig. 7 bis 9 ist die Grundplatte 1 auf den beiden Stützwänden 2 aufgestellt, wodurch die bisherige Unter-Unterseite 1'' die Oberseite bildet. Auf die Unterseite 1'' ist ein Plattenformrahmen 9 lose aufgelegt. Durch Einfüllen von Steinrohmaterial in den Plattenformrahmen 9 sind Spielbauplatten 10 ausformbar. Nach dem Erhärten des Steinrohmaterials ist der Plattenformrahmen 9 wiederum durch leichtes Verwinden der Grundplatte 1 von dieser zu lösen und gemeinsam mit der Spielbauplatte 10 von der Grundplatte 1 abnehmbar. Die Spielbauplatte kann nachfolgend aus dem Formrahmen 9 nach oben oder unten herausgedrückt werden.

In den Fig. 10 ist auf der bisherigen Unterseite 1'' ein abgewandelter rastenförmiger Formeinsatz 4 frei aufgelegt, der durch einen ebenfalls aufgelegten Plattenformrahmen 9 zur Bildung von Formkammern 7 geringerer Größe und Dicke umfaßt ist, die gemeinsam ein Ausformen von Spielbauverblendsteinen, Klinkernachbildungen 8 od.dgl. erlauben. Mit 7' ist eine weitere Formkammer für Halbsteine bezeichnet.

# M. GÖBEL
## PATENTANWALT

**8501 PYRBAUM-PRUPPACH**
PRUPPACHER HAUPTSTRASSE 5-7
TELEFON 09180 / 675

**BANKKONTEN**
VOLKSBANK NÜRNBERG 45 2 33 BLZ 760 900 00
COMMERZBANK NÜRNBERG 8 300 907 BLZ 760 400 61

- 9 -

Didi Spielwaren GmbH, D 8430 Neumarkt Opf.


Patentansprüche


1. Vorrichtung zum Ausformen von Spielbausteinen und Spielbauplatten aus einem erhärt- oder polymerisierbaren Werkstoff, gekennzeichnet durch eine Grundplatte (1) mit einer ebenen Ober- (1') und Unterseite (1'') und zwei auf der Oberseite (1') im Abstand planparallel nebeneinander fest angeordneten Stützwänden (2) sowie mindestens einem zwischen den Stützwänden (2) auf der Oberseite (1') der Grundplatte (1) frei auflegbaren, sich bis zu den Stützwänden (2) erstreckenden Formeinsatz (4) mit Formkammern (7).


2. Vorrichtung nach Anspruch 1, dadurch gekennzeichnet, daß ein rasterförmiger Formeinsatz (4) auf der Grundplatte (1) auflegbar ist, dessen Breite im wesentlichen mit der Länge der Stützwände (2) ausgeführt ist, daß der Formeinsatz (4) zweireihig eine Anzahl nebeneinander ausgebildete Formkammern (7) mit den Stützwänden zugewandten
Offenseiten aufweist.

3. Vorrichtung nach Anspruch 1 und 2, dadurch gekennzeichnet, daß die Stützwände (2) mittels auf den einander abgewandten Seiten angeordneten Streben (3) kipp-
und verbiegungsfrei auf der Grundplatte (1) abgestützt
sind.

4. Vorrichtung nach Anspruch 1, dadurch gekennzeichnet,
daß die Grundplatte (1), die Stützwände (2) und die Streben (3) sowie der Formeinsatz (4) aus einem plastisch verformbaren Werkstoff gebildet sind.

5. Vorrichtung nach Anspruch 1 und 2, dadurch gekennzeichnet, daß der Formeinsatz (4) mit mindestens einer
Formkammer (7') mit zu den übrigen Formkammern (7) aufweisender Teillänge ausgebildet ist.

6. Vorrichtung nach Anspruch 1, dadurch gekennzeichnet,
daß die Grundplatte (1) auf den Stützwänden (2) aufstellbar ist und daß auf die Unterseite (1'') der Grundplatte
(1) mindestens ein umlaufend geschlossener Plattenformrahmen (9) frei auflegbar ist.

7. Vorrichtung nach Anspruch 6, dadurch gekennzeichnet, daß der Plattenformrahmen (9) einen auf der Unterseite (1'') frei aufgelegten rasterförmigen Formeinsatz (4)
umfaßt und gemeinsam mit dem Formeinsatz (4) Formkammern (7)
bildet.

0058733

Fig.1

Fig.2

Fig.3

Fig.4

Fig.10

0058733

2/2

Fig.5

Fig.6

Fig.7

Fig.9

Fig.8

**Europäisches Patentamt**

**EUROPÄISCHER RECHERCHENBERICHT**

Nummer der Anmeldung

EP 81 10 1271.5

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - A1 - 2 533 787 (FORM-PLAST EN-GINEERING UND KUNSTSTOFFVERAR-BEITUNGS-GMBH) <br> * Ansprüche 1, 2 * <br> -- | 1-3 | B 29 C 1/00 <br> A 63 H 33/14 |
| | FR - A - 2 109 383 (STE PARISIENNE D'EXPANSION CHIMIQUE) <br> * Seite 6, Zeilen 4 bis 6; Fig. 1, 2 * <br> -- | 1,6 | |
| A | GB - A - 1 143 076 (CRYSTAL PRODUCTS) <br> * Ansprüche 1, 2 * <br> -- | 7 | RECHERCHIERTE SACHGEBIETE (Int. Cl.³) <br> A 63 H 33/00 |
| A | DE - A1 - 2 906 779 (BEACHCROFT CONCRETE PARTITIONS LTD.) <br> * Seite 16, Zeilen 1 bis 16 * <br> -- | | B 22 C 7/06 <br> B 28 B 7/00 <br> B 29 C 1/00 <br> B 29 C 5/00 <br> G 09 B 25/04 |
| A | DE - U - 7 904 339 (MELAINA TRUST) <br> * Ansprüche 1 bis 4 * <br> -- | 7 | |
| A | DE - A1 - 2 444 721 (H. KNEBEL) <br> * Anspruch 1 * <br> -- | | |
| A | US - A - 3 867 503 (T.W. SHOE) <br> * Anspruch 1 * <br> -- | | KATEGORIE DER GENANNTEN DOKUMENTE |
| A | DE - A1 - 2 821 326 (H.E. TUSCH) <br> * Anspruch * <br> ---- | | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patent-familie, übereinstimmendes Dokument |

| | Der vorliegende Recherchenbericht wurde für alle Patentansprüche erstellt. | | |
|---|---|---|---|
| Recherchenort <br> Berlin | Abschlußdatum der Recherche <br> 21-08-1981 | Prüfer <br> BITTNER | |

EPA form 1503.1 06.78